# EUROPEAN PATENT SPECIFICATION

(11) **EP 2 495 085 B1**
(45) Date of publication and mention of the grant of the patent: **09.10.2013**
(21) Application number: 12157000.6
(22) Date of filing: 24.02.2012
(51) Int. Cl.: B29C 45/27, B29C 45/73

(54) **Injector for equipment for injection moulding of plastic materials**
Spritzgiessdüse für Kunststoffmaterialien
Buse de moulage par injection de matières plastiques

(30) Priority: 01.03.2011 IT TO20110179
(43) Date of publication of application: 05.09.2012
(73) Proprietor: Inglass S.p.A., 31020 San Polo di Piave (Treviso) (IT)
(72) Inventor: Rossi, Massimo, 31010 Orsago (TV) (IT); Domenighini, Nicola, 33050 Percenicco (UD) (IT)
(74) Representative: Buzzi, Franco

(56) References cited:
- WO-A1-01/96090
- DE-C1- 4 445 744
- JP-A- 2002 079 549
- US-B1- 6 797 925

## Description

### Field of the invention

The present invention relates to injectors for equipment for injection moulding of plastic materials of the type comprising a nozzle body and a tubular heater coaxially fitted in contact of thermal transmission on the nozzle body.

The function of the heater is notoriously that of keeping in the fluid state the plastic material coming from a hot chamber and injected within the cavity of a mould through the terminal of the nozzle body, at the right, rigorously controlled, injection temperature. For this reason the tubular heater is equipped with one or more electrical heating resistors controlled via a thermocouple for transferring heat to the nozzle body and, through this, to the plastic material during injection.

The thermal profile in the median part of the nozzle body, comprised between the areas of inlet and outlet of the plastic material, is closely linked to the powers developed for countering the thermal bridges on the points of contact with the mould, i.e., on the tip and on the back of the injector. For this reason it is necessary for the heating action applied by the heater to the central part of the nozzle body to be less than the corresponding action applied to its end areas.

### Prior art

To obtain said differentiated heating effect the known art traditionally envisages that the electrical resistor, wound in a helix on the tubular heater, presents turns with greater pitch, i.e., less close to one another, along the area corresponding to the central part of the nozzle body. However, taking into account the fact that the tubular heater is made of a material with high thermal conductivity, said arrangement is not sufficiently effective on account of the substantially uniform distribution of the temperature along the entire extension of the heater, notwithstanding the differentiated arrangement of the turns of the resistor.

In an attempt to overcome this drawback, it has been proposed in the document No. DE-4445744C to provide the tubular heater with a generally median portion not in contact with the nozzle body, obtained via an internal reduction of thickness of the wall of the heater. Said reduction determines, with the corresponding area of the external wall of the nozzle body facing it, an air space or gap.

This solution, however effective for the purposes of interruption of the direct transmission of heat from the median area of the heater to the corresponding median area of the nozzle body by thermal conduction, is not at all effective in regard to the transmission of heat by irradiation and convection. The air space or gap, which in the aforesaid known solution cannot generally be greater than 0.5-1 mm, leads in any case to a significant adverse effect on the thermal profile of the injector, precisely by irradiation and convection.

The document No. WO-01/96090 envisages through openings in the median area of the tubular heater, to which there correspond areas of reduced thickness of the body of the nozzle, with the constructional complications of the latter that derive therefrom.

### Summary of the invention

The object of the invention is to overcome the aforesaid drawback in an effective, but at the time same simple and economically advantageous, way.

With a view to achieving said object, the subject of the invention is an injector as defined in the annexed claims.

Thanks to this idea of solution, separation for the purposes of transmission of heat between the median area of the heater and the corresponding median area of the nozzle body is practically complete in so far as, in addition to the suppression of the transmission of heat by conduction, also the transmission by convection and irradiation is drastically abated. Consequently, the temperature along the central area of the injector is kept closer to the set-point value, whilst in the end areas subjected to greater dissipation the thermal power is totally distributed.

### Brief description of the drawings

The invention will now be described in detail with reference to the annexed drawings, which are provided purely by way of non-limiting example and in which:

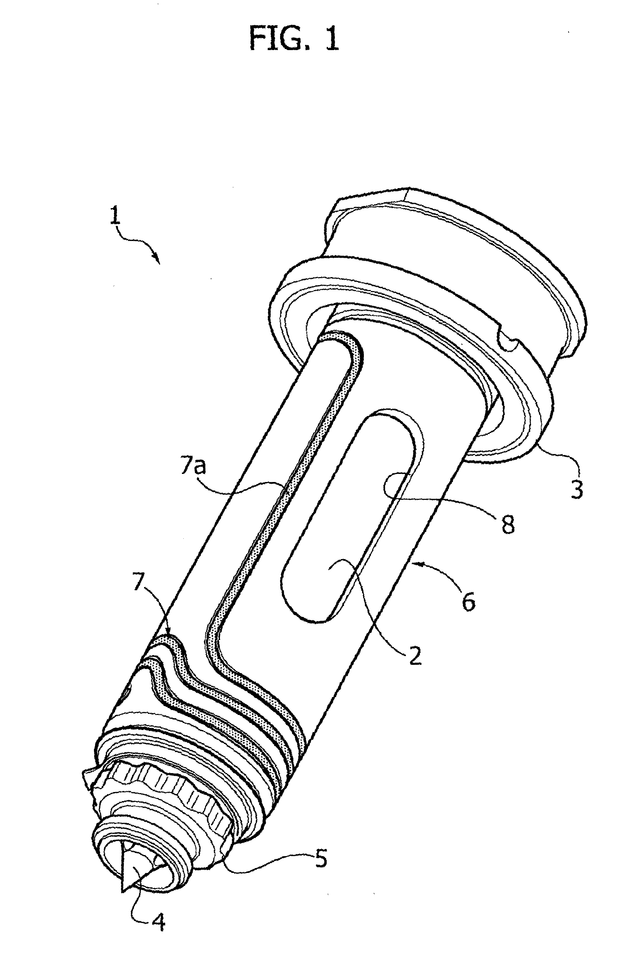

- Figure 1 is a schematic perspective view of an injector for equipment for injection moulding according to the invention; and

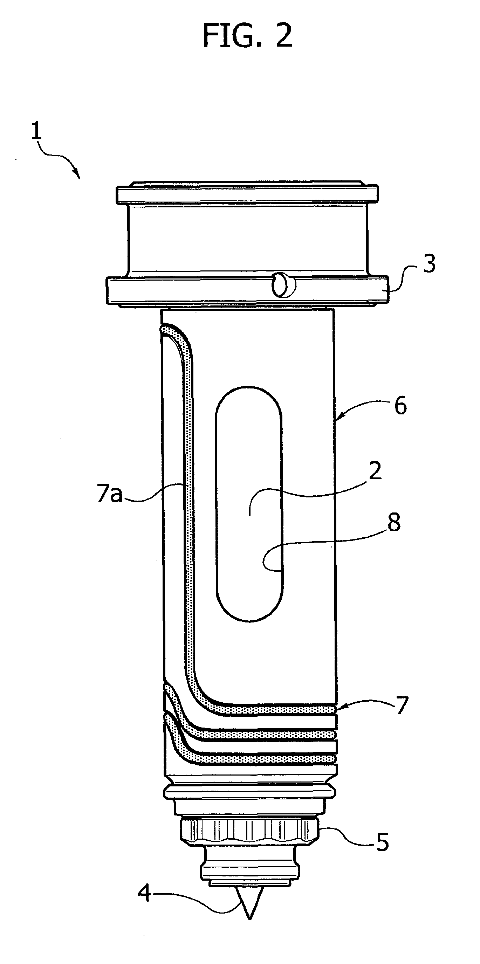

- Figure 2 is a view in side elevation of the injector.

### Detailed description of the invention

With reference to the drawings, designated as a whole by 1 is an injector for equipment for injection moulding according to a preferred embodiment of the invention, comprising a generally cylindrical nozzle body 2 that extends between a rear flange collar 3 and a front nozzle terminal 4 with corresponding fixing ring-nut 5.

Designated by 6 is a tubular heater coaxially fitted in contact of thermal transmission (as will be seen partial) on the nozzle body 2. The tubular heater 6 is constituted by a cylindrical body made of material with high thermal conductivity, wound on which is at least one electrical heating resistor 7 controlled via a thermocouple (not visible in the drawings). The winding of the heating resistor 7 is helical in the end areas of the heater 6 close to the collar 3 and to the nozzle terminal 4, whilst in the area comprised between said ends the resistor 7 has a portion 7a that extends linearly, parallel to the axis of the injector 1.

According to the peculiar characteristic of the invention, the substantially median portion of the tubular heater 6 has at least one portion not in contact with the nozzle body 2, defined by a through opening 8 through which the nozzle body 2 is directly exposed to the external environment.

In the case of the example illustrated, the tubular heater 6 has a pair of diametrally opposite through openings 8 (only one of which is visible in the drawings) in the form of axially elongated slots. It should, however, be noted that the arrangement, number, and shape of the through opening 8 or each through opening 8 may differ from the example illustrated provided that they are suitable for defining one or more areas of complete separation between the tubular heater 6 and the nozzle body 2 for the purposes of thermal transmission not only by conduction, but also by irradiation and convection.

Thanks to the conformation described above, tests conducted by the present applicant have confirmed that, during operation, the temperature of the central part of the nozzle body 2 remains substantially constantly close to the set-point value, whilst in the areas of greater dissipation corresponding to the parts of contact with the mould (collar 3 and nozzle terminal 4) the thermal power is distributed in an optimal way, countering the thermal bridges.

## Claims

1. An injector (1) for equipment for injection moulding of plastic materials, comprising a nozzle body (2) and a tubular heater (6) coaxially fitted in contact of thermal transmission on the nozzle body (2), wherein said tubular heater (6) has at least one generally median portion not in contact with the nozzle body (2) consisting of a through opening (8),
said injector being **characterized in that** said through opening (8) is in the form of an axially elongated slot and said heating resistor (7) has, along said through opening (8) and at a side thereof, a generally rectilinear portion (7a) parallel to the axis of the injector (1).

2. The injector according to Claim 1, **characterized in that** said tubular heater (6) has two diametrally opposite axially elongated slots (8), extending between which is said generally rectilinear portion (7a) of the heating resistor (7).

## Patentansprüche

1. Einspritzdüse (1) für ein Gerät zum Spitzgießen von Kunststoffmaterialen, umfassend einen Düsenkörper (2) und eine röhrenförmige Heizeinrichtung (6), die koaxial in Wärmeübertragungskontakt an dem Düsenkörper (2) eingefügt ist, wobei die röhrenförmige Heizeinrichtung (6) wenigstens einen im wesentlichen mittleren Abschnitt hat, der nicht mit dem Düsenkörper (2) in Kontakt ist und aus einer Durchgangsöffnung (8) besteht,
wobei die Einspritzdüse **dadurch gekennzeichnet ist, dass** die Durchgangsöffnung (8) die Gestalt eines axial länglichen Schlitzes hat und der Heizwiderstand (7) entlang der Durchgangsöffnung (8) und auf seiner Seite einen im wesentlichen geradlinigen Abschnitt (7a) hat, der parallel zu der Achse der Einspritzdüse (1) verläuft.

2. Einspritzdüse nach Anspruch 1, **dadurch gekennzeichnet, dass** die röhrenförmige Heizeinrichtung (6) zwei diametral gegenüberliegende, axial längliche Schlitze (8) hat, zwischen denen sich der im wesentlichen geradlinige Abschnitt (7a) des Heizwiderstandes (7) erstreckt.

## Revendications

1. Injecteur (1) pour un équipement de moulage par injection de matières plastiques, comprenant un corps de buse (2) et un dispositif de chauffage (6) tubulaire assemblé coaxialement en contact de transmission thermique sur le corps de buse (2), dans lequel ledit dispositif de chauffage (6) tubulaire a au moins une partie généralement médiane qui n'est pas en contact avec le corps de buse (2) consistant en une ouverture traversante (8),
ledit injecteur étant **caractérisé en ce que** ladite ouverture traversante (8) est sous la forme d'une fente allongée axialement et ladite résistance de chauffage (7) comporte, le long de ladite ouverture traversante (8) et d'un côté de celle-ci, une partie généralement rectiligne (7a) parallèle à l'axe de l'injecteur (1).

2. Injecteur selon la revendication 1, **caractérisé en ce que** ledit dispositif de chauffage (6) tubulaire comporte deux fentes allongées axialement (8) diamétralement opposées, entre lesquelles ladite partie généralement rectiligne (7a) de la résistance de chauffage (7) s'étend.
